**Europäisches Patentamt**

**European Patent Office**

**Office européen des brevets**

(19)

(11) Veröffentlichungsnummer : **0 245 648 B2**

(12) **NEUE EUROPÄISCHE PATENTSCHRIFT**

(45) Veröffentlichungstag der neuen Patentschrift :
29.04.92 Patentblatt 92/18

(51) Int. Cl.$^5$ : **A01B 29/04**, A01B 49/06, A01B 29/06

(21) Anmeldenummer : 87105081.1

(22) Anmeldetag : 06.04.87

(54) **Bodenwalze.**

(30) Priorität : 16.09.86 DE 3631462
13.05.86 DE 3616021
25.02.87 DE 3705952

(43) Veröffentlichungstag der Anmeldung :
19.11.87 Patentblatt 87/47

(45) Bekanntmachung des Hinweises auf die
Patenterteilung :
13.09.89 Patentblatt 89/37

(45) Bekanntmachung des Hinweises auf die
Entscheidung über den Einspruch :
29.04.92 Patentblatt 92/18

(84) Benannte Vertragsstaaten :
AT BE CH DE ES FR GB GR IT LI LU NL SE

(56) Entgegenhaltungen :
EP-A- 0 091 878
EP-A- 0 160 612
DE-A- 1 922 313
DE-A- 2 001 062
DE-A- 3 218 635
DE-C- 1 038 810
FR-A- 1 261 329
FR-A- 2 347 863
US-A- 2 648 369
US-A- 2 713 373
US-A- 3 181 622

(56) Entgegenhaltungen :
US-A- 3 339 643
US-A- 3 426 821
US-A- 3 635 273
US-A- 3 777 797
US-A- 4 373 456
US-A- 4 489 790

(73) Patentinhaber : **Amazonen-Werke H. Dreyer
GmbH & Co. KG**
**Am Amazonenwerk 9-13**
**W-4507 Hasbergen-Gaste (DE)**

(72) Erfinder : **Grosse-Scharmann, Franz, Dr.,**
**W-2872 Hude (DE)**
Erfinder : **Steenken, Bernhard**
**Waldhoefe 17**
**W-4475 Soegel 2 (DE)**
Erfinder : **Gattermann, Bernd**
**Eichenwall 3,**
**W-2872 Hude 1 (DE)**
Erfinder : **Siefken, Claus**
**Preussenweg 27**
**W-2872 Hude (DE)**
Erfinder : **Feldhaus, Werner**
**Huntloser Strasse 25**
**W-2879 Gevershausen (DE)**

(74) Vertreter : **Patentanwälte Grünecker,
Kinkeldey, Stockmair & Partner**
**Maximilianstrasse 58**
**W-8000 München 22 (DE)**

## Beschreibung

Die Erfindung betrifft eine Bodenwalze gemäß des Oberbegriffes des Patentanspruches 1.

Eine ähnliche Bodenwalze ist bereits durch die Zeitschrift "Top Agrar" Heft 2, 1982, Seite 99 bekannt geworden. Außerdem ist eine ähniche Nachlaufwalze hinter eine Bodenbearbeitungsmaschine durch die US-A 3 339 643 bekannt.

Diese für das Wiesenwalzen vorgesehene Walze besteht aus mehreren auf einem zentralen Tragrohr nebeneinander aufgefädelten LKW-Reifen. In dieser Veröffentlichung ist erwähnt, daß die Reifen noch walken können und man so u.U. sogar einen gewissen Reinigungseffekt der LKW-Reifen erzielt. Dieses mag durchaus bei dem Einsatz der Walze als Wiesenwalze zum Walze von Wiesen der Fall sein.

Wird jedoch diese Walze zum Walzen von Saatbeeten bzw. in Bodenbearbeitungskombinationen hinter Bodenbearbeitungsgeräten zur Saatbettbereitung eingesetzt, so reicht diese Walkarbeit bei den LKW-Reifen zur Selbstreinigung jedoch keinesfalls aus. Des weiteren wird sich Boden zwischen die enzelnen Reifen setzten und immer weiter nach innen in Richtung des zentralen Tragrohres wandern, so daß bereits nach sehr kurzer Zeit beim Einsatz dieser Walze auf Ackerböden, beipielsweise hinter Bodenbearbeitungsgeräten, sich der Innenraum des jeweiligen Reifens sehr schnell mit Erde füllt. Diese Erde füllt den gesamten Hohlraum innerhalb der Reifen aus, so daß die Reifen nicht mehr walken können. Somit wird also auch kein Selbstreinigungseffekt mehr erzielt. Darüber hinaus wird die Walze zur Saatbettbereitung viel zu schwer und falls eine derartige Walze in Bodenbearbeitungskombinationen eingesetzt wird, kann die Bodenbearbeitungskombination über die Dreipunkthydraulik des die Bodenbearbeitungskombination tragenden Schleppers nicht mehr ausgehoben werden.

Darüber hinaus eignet sich diese bekannte Gummiwalze nicht, um bearbeiteten Boden wieder zurückzuverfestigen, da die Reifen sich im Bereich der Laufflächen zu sehr zusammendrücken.

Durch die deutsche Offenlegungsschrift 33 36 313 ist eine kombinierte Gerätekombination bestehend aus einer Bodenbearbeitungsmaschine und einer hinter der Bodenbearbeitungsmaschine angeordneten Nachlaufwalze bekannt geworden. Bei dieser bekannten Gerätekombination sind vor der Bodenbearbeitungsmaschine in einer Reihe nebeneinander mehrere Luftreifen auf einer gemeinsamen und durchgehenden Welle gelagert, wobei sich die Luftreifen ungefähr über die gesamte Arbeitsbreite der Gerätekombination erstrecken. Wie Versuche nun gezeigt haben, muß zur Saatbettbereitung mit einem äußerst geringen Luftdruck in diesen Luftreifen gearbeitet werden. Hierbei hat sich nun gezeigt, das anhaftende Erde bzw. sich zwischen den benachbarten Reifen festgesetzte Erde die Reifen von den Felgen drücken, so daß diese Erde schon bereits nach kurzer Einsatzzeit der Gerätekombination in das Innere der Luftreifen gelangt. Schon nach kurzer Zeit hat sich der gesamte Innenraum der Luftreifen mit Erdboden gefüllt. Hierdurch wird eine Walkarbeit der Reifen verhindert, so daß kein Selbstreinigungseffekt der Reifen mehr gegeben ist. Einerseits wird sich dann ein immer größer werdener Erdring um die Reifen herum aufbauen, außerdem entsteht ein äußerst schlechtes Saatbett. Falls bereits das Saatgut vor diesen Reifen in den Boden eingebracht worden ist, nehmen diese Reifen die oberste Bodenschicht und teilweise sogar das Saagut mit hoch, so daß das bereits im Boden abgelegte Saatgut wieder aufgenommen wird. Das im Boden abgelegte Saatgut wird somit nicht ausreichend mit Erde bedeckt, so daß sich zum einen äußerst ungünstige Bedingungen für den Keimvorgang des Saatgutes ergeben, zum anderen wird das Saatgut von den Vögeln aufgefressen.

Der Erfindung liegt nun die Aufgabe zugrunde, die bekannte Bodenwalze mit einfachen Mitteln so weiterzubilden, daß sie den Boden für ein Saatbett andrücken kann.

Diese Aufgabe wird erfindungsgemäß dadurch gelöst, daß im Inneren der Gummireifen zwischen dem Traggerüst und dem Bereich der Lauffläche des Reifens ein oder mehrere Stützkörper zum Abstützen der Lauffläche angeordnet sind. Infolge dieser Maßnahmen wird mit einfachsten Mitteln eine Bodenwalze aus nebeneinander angeordneten, einzelnen Gummireifen geschaffen, mit der sich der Boden eines Saatbettes in besonders vorteilhafter Weise andrücken läßt, ohne daß es zu einem Abspringen der Reifen von den Felgen durch anhaftende Erde bzw. sich zwischen den benachbarten Reifen festsetzende Erde kommt. Die Vorteile einer relativ starren Walze mit gutem Walzeffekt und einer relativ weichen, eine gute Walkarbeit aufweisende Walze werden hier in besonders vorteilhafter Weise miteinander kombiniert.

Gemäß einer anderen bevorzugten Ausführungsform ist vorgesehen, daß innerhalb der Gummireifen ein fester umlaufender Ring angeordnet ist, der einen etwas kleineren Außendurchmesser als der innere Außendurchmesser des Gummireifens aufweist. Hierbei ist vorgesehen, daß der auf einer Felge angeordnete Gummireifen sich beim Abrollen auf dem Erdboden auf diesem Ring abstützt, wobei der Ring eine dem Gummireifen zumindest annähernd entsprechende Kontur aufweist. Der innerhalb der Gummireifen angeordnete, feste umlaufende Ring stellt den wirksamen Walzendurchmesser dar. Dieser Ring begrenzt die Verformung des Gummireifens in der Aufstandsfläche des Reifens auf den Boden. Durch das Drehen des Gummireifens kommt es zu einer ständigen Veränderung der momentanen Aufstandsfläche des Reifenumfanges, wobei die Verformung des Reifens im Bereich der Aufstandsfläche immer wieder aufgehoben wird, wodurch der Reifen eine

2

Walkarbeit ausführt. Dieses ständige Walken des Gummireifens ruft einen Selbstreinigungseffekt der Reifen hervor, so daß die im Bereich der Aufstandsfläche am Reifen anhaftende Erde bei Verlassen des Reifenumfanges aus dem Bereich der Aufstandsfläche sofort wieder vom Gummireifen abspringt. Hierdurch wird ein Walzenelement geschaffen, das nur im Bereich seiner Aufstandsfläche als relativ starrer Walzenkörper ausgebildet ist. Das ständige Verformen des Reifens führt zu einer ständigen Walkarbeit und somit zu einer ständigen Selbstreinigung des Reifens. Hierbei ist es möglich, daß der Reifen ohne Luft bzw. nur mit sehr wenig Luft gefüllt ist.

Bei der Anordnung eines Ringes innerhalb eines Gummireifens wird bevorzugt, daß die Gummireifen mit den Felgen über Befestigungs- oder Klemmelemente verbunden sind. Die Befestigungs- oder Klemmelemente sorgen dafür, daß der Wulst des Reifens ständig gegen das Felgenhorn der Felge gedrückt wird, so daß keine Erde in das Innere der Gummireifen gelangen kann.

In einer weiteren Ausführungsform ist erfindungsgemäß vorgesehen, daß die Bodenwalze als Fahrwerk einer Drillmaschine ausgebildet ist, und daß von der Bodenwalze her die Dosierorgane der Drillmaschine angetrieben werden. Infolge dieser Maßnahmen wird mit einfachsten Mitteln eine in die Sämaschine integrierte Bodenwalze geschaffen, die den durch eine Bodenbearbeitungsmaschine gelockerten Boden rückverfestigt, wodurch das Saatgut in einen optimal angedrückten Boden eingebracht wird. Somit erhält das Saatgut Anschluß an die Bodenkapillare und es ergeben sich optimale Wachstumsbedingungen für das in den Boden abgelegte Saatgut. Durch die nebeneinander angeordneten Gummireifen entsteht eine verstopfungsfreie Bodenwalze, die infolge der Walkarbeit der Reifen einen Selbstreinigungseffekt aufweist, wodurch der Einsatz von am Walzenkörper angeordneten Abstreifern überflüssig wird. Durch die Abstützung der Sämaschine auf der Bodenwalze ergibt sich eine äußerst kompakte Baueinheit, die sowohl als Solomaschine mit Packwirkung als auch in Kombination mit einem Bodenbearbeitungsgerät gefahren werden kann. Wird die auf eine Reifenbodenwalze aufgesetzt Sämaschine in Kombination mit einer Bodenbearbeitungsmaschine gefahren, bewirkt die kompakte Bauweise dieser Maschine eine wesentliche Verlagerung des Schwerpunktes in Richtung auf den die Kombination ziehenden Schleppers, was zu einer Reduzierung der zum Ausheben der Kombination notwendigen Hubkräfte führt. Hierdurch sinkt der Hubkraftbedarf des die Kombination ziehenden Schleppers, wodurch der Einsatz von Schleppern mit geringerer Leistungsstärke möglich wird. Weiterhin wird beim Auftreffen auf Steinen nicht die gesamte Maschine, wie dies bei einem starren Walzenkörper der Fall wäre, angehoben, sondern der entsprechende Reifen zusammenggedrückt, da die Reifen einzeln ausweichen können.

In einer weiteren erfindungsgemäßen Ausführungsform ist vorgesehen, daß die Bodenwalze als Nachlaufwalze hinter einer Bodenbearbeitungsmaschine angeordnet ist. Hierdurch entsteht eine Bodenbearbeitungsmaschine mit verstopfungsfreier Nachlaufwalze, die infolge der Walkarbeit der Reifen einen Selbstreinigungseffekt aufweist, wodurch der Einsatz von am Walzenumfang angeordneten Abstreifern überflüssig wird. Das Walken der Reifen sorgt dafür, daß keine Erde an der Walze haften bleibt bzw. sich sofort wieder löst. Da keine Abstreifer am Walzenumfang angeordnet sind, wird das Drehen der Bodenwalze auch nicht durch Abstreifer behindert, so daß der Walzenumfang ohne nennenswerten Schlupf auf der Bodenoberfläche abrollt, wodurch die von der Bodenbearbeitungsmaschine bearbeitete Bodenoberfläche in besonders vorteilhafter Weise rückverfestigt wird und ein feinkrümeliges sowie ebenes Saatbett entsteht.

Gemäß einer weiteren Ausgestaltung der Erfindung sind die Gummireifen auf einem durchgehenden Tragrohr angeordnet, welches einen Außendurchmesser aufweist, der zumindest etwa dem Innendurchmesser der Gummireifen entspricht, wobei innerhalb der Gummireifen Abstandsringe angeordnet sind, deren Innendurchmesser zumindest etwa dem Innendurchmesser der Gummireifen entspricht und wobei ferner innerhalb der Gummireifen als Stützkörper Abstützringe angeordnet sind, deren Außendurchmesser in montierter Position kleiner als der Innendurchmesser der Lauffläche der Lauffläche der Gummireifen ist.

Infolge dieser Maßnahmen wird erreicht, daß keine Erde in den Innenraum der Gummireifen gelangen kann, und daß weiterhin die Gummireifen bei einem Abrollen auf der Bodenoberfläche nur etwa um den Betrag zusammengedrückt werden, der zur Selbstreinigung der Walze erforderlich ist. Des weiteren wird eine Rückverfestigung durch diese Gummireifenbodenwalze erreicht, da die Lauffläche der Gummireifen sich beim Abrollen auf der Bodenoberfläche auf den Abstützringen abstützen und so unmittelbar Rückverfestigungskräfte von der Bodenwalze auf den Boden einwirken. In bevorzugter Weise sind diese Reifen als Gürtelreifen mit "weichen" Seitenwänden, vorzugsweise gebrauchte PKW-Reifen.

Damit die Abstützringe sehr einfach in die Gummireifen eingebracht und montiert werden können, ist erfindungsgemäß vorgesehen, daß die innerhalb der Gummireifen angeordneten Abstützringe aus zumindest zwei, vorzugsweise drei Teilen zusammengesetzt sind.

Damit die Gummireifen einerseits noch ausreichend beim Abrollen auf der Bodenoberfläche walken können, und daß andererseits die Gummireifen nicht zu sehr in Richtung Walzenachse zusammengedrückt werden können, ist erfindungsgemäß vorgesehen, daß zwischen der Außenfläche der Abstützringe und der Innenfläche der Lauffläche des Gummireifens ein Abstand von zumindest einem Zehntel, vorzugsweise 1/6 bis 3/10 der Höhe der Gummireifenseitenwand vorhanden ist.

Eine besonders gute Abdichtung der Gummireifen, damit keine Erde in das Innere der Gummireifen gelangen kann, wird dadurch erreicht, daß zwischen den nebeneinander auf dem Tragrohr angeordneten Gummireifen jeweils ein umlaufender Ring angeordnet ist.

Des weiteren ist bevorzugt, daß die aus mehreren Teilen zusammengesetzten Abstützringe an den Abstandsringen befestigt sind. Hierdurch ergibt sich eine äußerst konstruktive einfache Anordnung der Abstützringe innerhalb der Gummireifen.

Darüber hinaus wird bevorzugt, daß die Abstandsringe aus zwei kreisförmig gebogenen Rundstäben besteht, die über zumindest drei Stege in einem Abstand miteinander verbunden sind. Hierdurch wird einerseits die exakte Anordnung der Gummireifen auf dem Tragrohr erreicht und andererseits das Wandern der Gummireifen auf dem Tragrohr verhindert. Darüber hinaus gewährleisten die Abstandsringe, daß die nebeneinander angeordneten Gummireifen im Bereich der Abstandsringe und ihrem inneren Bereich fest gegeneinander gedrückt werden, so daß keine Erde in den Innenbereich des Gummireifens gelangen kann.

In einer anderen Ausführungsform ist vorgesehen, daß die Teile der Abstützringe kreisförmige Segmentstücke sind, und daß an den Segmentstücken nach innen weisende Stege angeordnet sind, die sich auf dem Tragrohr und/oder den Abstützringen abstützen. Hierdurch ergibt sich einerseits eine sehr einfache Montage der Abstützringe und andererseits ist sichergestellt, daß die Abstützringe durch die Abstützringe genau fixiert innerhalb der Gummireifen in dem Inneren der Gummireifen angeordnet sind.

Damit die Gummireifen fest auf dem Tragrohr der Bodenwalze angeordnet sind, und daß die Gummireifen zueinander bzw. zum Tragrohr abgedichtet sind, kann vorgesehen sein, daß an dem Tragrohr zumindest an der einen Stirnseite des Tragrohres eine Spannvorrichtung zum Festklemmen der Gummireifen auf dem Tragrohr in seitlicher Richtung angeordnet ist.

Eine besonders einfache Montage der Abstützringe ergibt sich dadurch, daß die Gummireifen auf einem durchgehenden Tragrohr angeordnet sind, welches einen Außendurchmesser aufweist, der zumindest etwa dem Innendurchmesser der Gummireifen entspricht und daß innerhalb der Gummireifen zumindest ein Abstützring angeordnet ist, der aus einem, bei einer Temperatur über zumindest 70°C verformbaren Thermoplastmaterial besteht, welches beinormaler Betriebstemperatur ausreichend steif ist. Hierdurch ergeben sich die gleichen Vorteile wie bei den vorstehend geschilderten Ausführungsformen, jedoch wird hier an Stelle einen aus Metall hergestellter Abstützring ein aus einem Thermoplastmaterial bestehender Abstützring verwendet.

Eine weitere Ausgestaltung der Erfindung sieht vor, daß in jedem Gummireifen mindestens zwei Abstützringe angeordnet sind.

Der Gummireifen wird jeweils im Außenbereich abgestützt, so daß zwei stark verfestigte Bodenstreifen entstehen, die von einem Gummireifen erzeugt werden. Dadurch, daß die Abstützringe in einem Abstand voneinander angeordnet sind, und daß zwischen den Abstandsringen zumindest in deren Außenbereich ein freier umlaufender Freiraum ist, kann der mittlere Bereich der Lauffläche sich nach innen in diesen Freiraum zwischen den beiden Abstützringen hineinwalken. Durch das wieder Ausbeulen der mittleren Lauffläche nach dem Abrollen auf der Bodenoberfläche entsteht ein Walkeffekt der Lauffläche des Gummireifens, wodurch die Lauffläche des Gummireifens in vorzüglicher und einfacher Weise sich selbst reinigt. Des weiteren wird durch die Anordnung dieser beiden Abstützringe innerhalb des Gummireifens und dadurch, daß mehrere Gummireifen nebeneinander aufgereiht sind, daß im Bereich eines Gummireifens im Bereich der Abstützringe stark verfestigte Bodenstreifen entstehen, die etwa derart verfestigt sind, daß die in diesem Bodenstreifen abgelegten Saatkörner bereits optimale Bedingungen zu keimen und auflaufen vorfinden. Der von der mittleren Lauffläche herrührende nicht so stark verdichtete Bodenstreifen setzt sich aufgrund des natürlichen Absetzvorganges des Bodens im Laufe der Zeit, so daß aufgrund natürlicher Bedingungen dieser Bereich erst nach einigen Wochen den optimal verfestigten Zustand erreicht, wenn die Samenkörner, die in den Stärker verfestigten Bereichen im Bereich der Abstützringe abgelegt sind, mit ihren Wurzeln in den mittleren Bereich gelangen, auch hier optimale Wachstumsbedingungen vorfinden. Der Bereich, welcher von dem von zwischen zweinebeneinanderliegenden Reifen sich befindlichen freien Raum herrührt und praktisch nur gering oder überhaupt nicht befestigt ist, verfestigt sich aufgrund des natürlichen Absetzvorganges des Bodens auch nach einiger Zeit so stark, daß nach längerer Zeit auch hier sich dann der optimale Verfestigungsgrad und die optimalen Wachtumsbedingungen für das Saatgut einstellen.

In bevorzugter Weise sind die Abstützringe dicht neben der Innenwand des jeweiligen Gummireifens angeordnet. Hierdurch ist gewährleistet, daß in genügend großen großen Abständen die Abstützringe innerhalb der Gummireifen angeordnet sind, so daß die erfindungsgemäß erwünschten stark verdichteten, weniger verdichteten und gering verdichteten Bodenstreifen entstehen können und daß weiterhin in ausreichendem Maße eine Walkarbeit des Gummireifens erzielt wird, wobei sich die mittlere Lauffläche stark nach innen zwischen die Abstützringe hineindrücken kann, so daß eine sehr starke Walkung der Lauffläche beim Abrollen auf dem Boden und vom Boden freikommen stattfindet, welches in vorzüglicher Weise eine Selbstreinigung der Reifen gewährleistet ist.

Um die Abstützringe in einfacher Weise in die Reifen montieren zu können, ist vorzugsweise vorgesehen, daß die Abstützringe jeweils aus drei zusammengesetzten Teilen bestehen. Diese Teile der Abstützringe werden dann innerhalb des Reifens durch Verschrauben oder Verschweißen zusammengefügt.

Damit die Abstützringe die Gummireifen nicht beschädigt bzw. nur eine Beschädigung der Gummireifen in einem zu vernachlässigendem Maße gewährleistet ist, ist vorzugsweise vorgesehen, daß die Abstandsringe auf ihrer Außenseite eine abgerundete Abstützfläche aufweisen. Die Abstützelemente können entweder aus geformten Blech oder aus Kunststofformteilen bestehen.

Damit ein ausreichend großer Walkeffekt der Lauffläche des Gummireifens zur Selbstreinigung der Gummireifen gewährleistet ist, ist vorzugsweise vorgesehen, daß der Abstand der beiden innerhalb des Gummireifens angeordneten Abstützringe derart groß ist, daß die Lauffläche des jeweiligen Reifen sich in den Freiraum zwischen diesen Abstützringen nach innen zumindest etwas hineindrücken kann.

Bei sehr breiten Gummireifen kann es besonders vorteilhaft sein, daß innerhalb der Gummireifen jeweils mehr als zwei Abstandsringe angeordnet sind, die in ihrem Außenbereich zueinander einen umlaufenden Freiraum aufweisen. Hierdurch ist auch gewährleistet, daß bei der Durchführung der Engsaat bei relativ breiten Gummireifen mehr als zwei stark verdichtete Streifen von einem Gummireifen erzeugt werden, die dann in relativ kleinen Abständen zueinander liegen. Des weiteren wird durch den umlaufenden Freiraum gewährleistet, daß der Gummireifen sich mehr als an einer Stelle nach innen wölben kann, so daß auch hier wieder ein sehr starker Walkeffekt der Laufflächen der Gummireifen zum Zwecke der Selbstreinigung der Gummireifen erreicht wird.

Des weiteren ist vorzugsweise vorgesehen, daß hinter der Bodenwalze Säschare einer Sämaschine angeordnet sind. Erfindungsgemäß sind die Säschare derart angeordnet, daß jeweils ein Säschar in Verlängerung eines Abstützringes, der im Inneren der Gummireifen angeordnet ist, angeordnet ist. Infolge dieser Maßnahme wird erreicht, daß das Saatgut durch die Säschare in den stark verfestigten Bereichen, die praktisch bereits einen derartig verfestigten Bodenzustand aufweisen, der optimal für die Keim- und Wachstumsbedingungen der Säschare ist, abgelegt werden.

Auf schwierigen Böden kann es vorteilhaft sein, daß am Rahmen der Bodenwalze oder am Rahmen der nachfolgenden Sämaschine Räumzinken angeordnet sind, die jeweils in den Zwischenraum zwischen zwei einander benachbarten Gummireifen ragen. In bevorzugter Weise sind die Räumzinken etwa waagerecht angeordnet und befinden sich in einem Abstand zu den Zwischenstücken zwischen den Gummireifen.

Weitere Einzelheiten der Erfindung sind der Beispielsbeschreibung sowie den Zeichnungen zu entnehmen. Hierbei zeigen

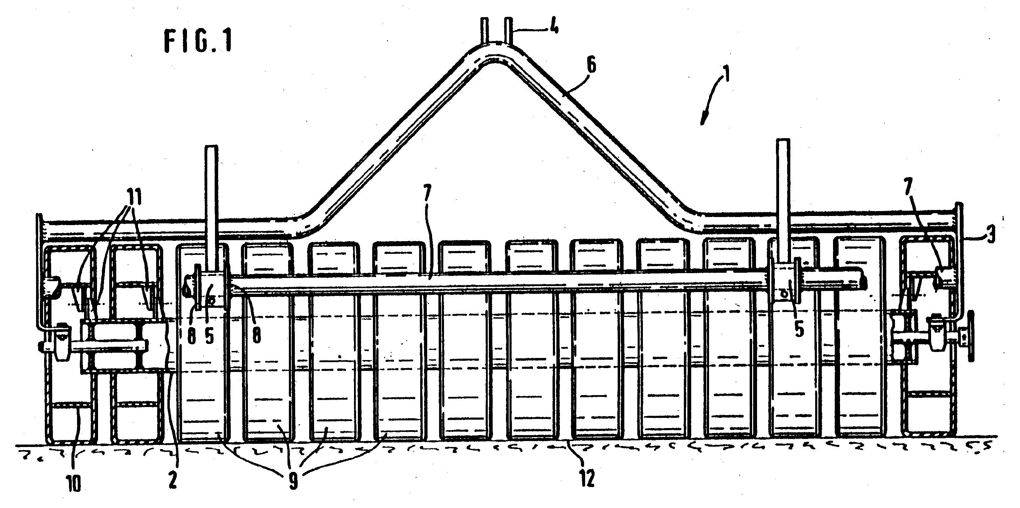

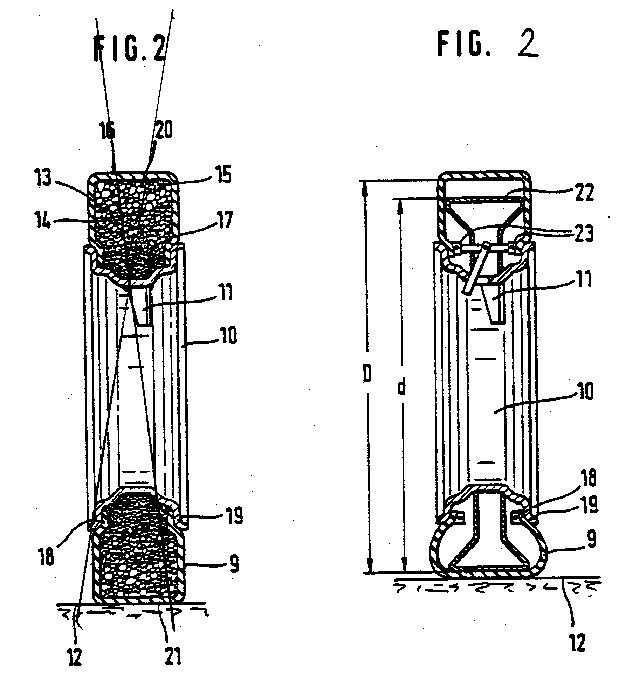

Fig. 1 eine Bodenwalze in der Ansicht von hinten, ohne Stützkörper.

Fig. 2 eine andere Ausführungsform des Gummireifens, wobei innerhalb der Gummireifen ein fester, umlaufender Ring angeordnet ist, in Schnittdarstellung,

Fig. 3 die als Fahrwerk einer Drillmaschine ausgebildete erfindungsgemäße Bodenwalze in Kombination mit einem Bodenbearbeitungsgerät in Betriebsstellung,

Fig. 4 die als Fahrwerk einer Drillmaschine ausgebidete Bodenwalze gemäß Fig. 4 in verschwenkter Position,

Fig. 5 eine erfindungsgemäße Bodenwalze, die als Fahrwerk einer hinter einem Bodenbearbeitungsgerät angeordneten Drillmaschine ausgebildet ist, in der Seitenansicht,

Fig. 6 eine erfindungsgemäße Bodenwalze in Schnittdarstellung,

Fig. 7 eine weitere Bodenwalze in Schnittdarstellung,

Fig. 8 eine weitere Bodenwalze in Schnitt- und in Teilansicht,

Fig. 9 die Montage des Abstützringes gemäß Fig. 9 in einen Gummireifen,

Fig. 10 eine weitere Bodenwalze im Schnitt und in der in der Seitenansicht,

Fig. 11 die Montage des Außenringes des Abstützringes,

Fig. 12 eine Gerätekombination mit einer erfindungsgemäßenBodenwalze in der Seitenansicht,

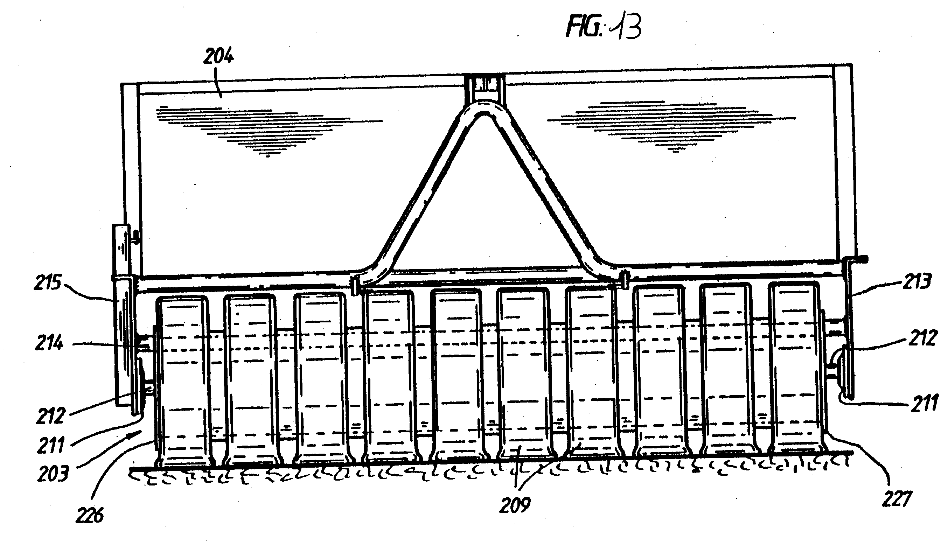

Fig. 13 die Bodenwalze in der Ansicht II-II mit aufgebauter Sämaschine,

Fig. 14 die Bodenwalze in der Ansicht von hinten ausschnittsweise und teilweise im Schnitt,

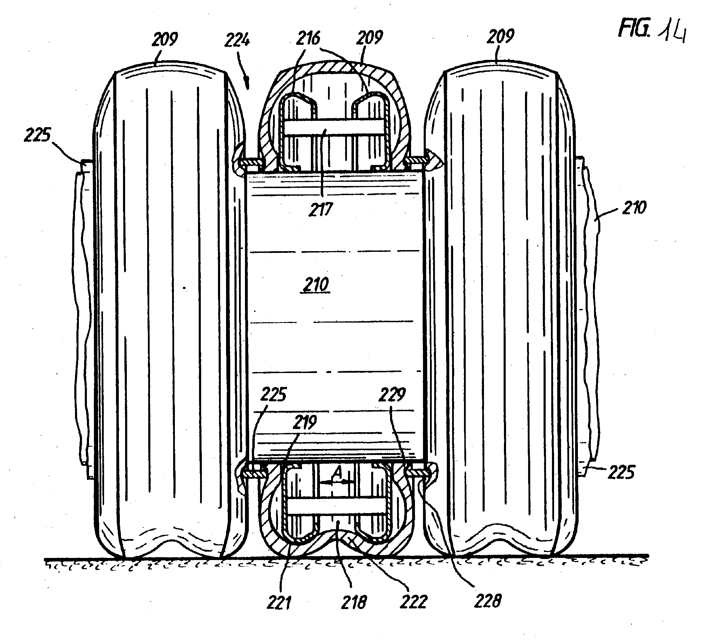

Fig. 15 die Bodenwalze in der Ansicht von hinten in Teilansicht und teilweise im Schnitt mit der streifenweisen Verfestigung des Bodens in Prinzipdarstellung,

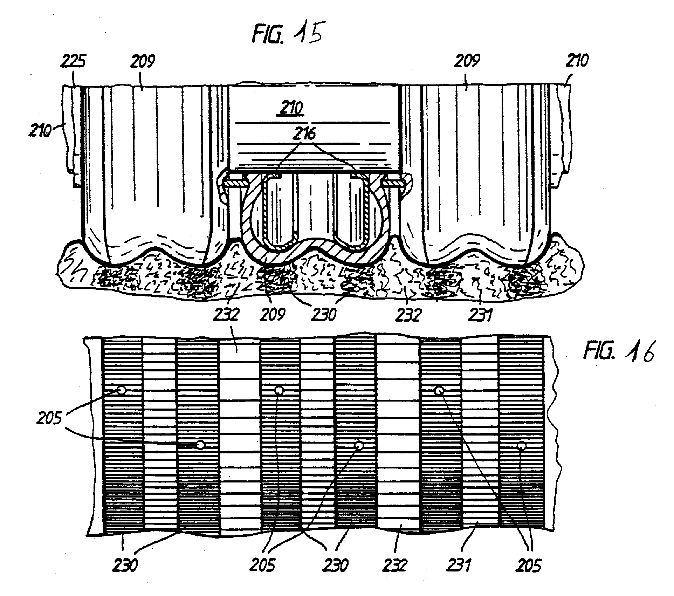

Fig. 16 die Darstellung der streifenweisen unterschiedlichen Verfestigung durch die erfindungsgemäße Bodenwalze entsprechend Fig. 16 in Prinzipdarstellung,

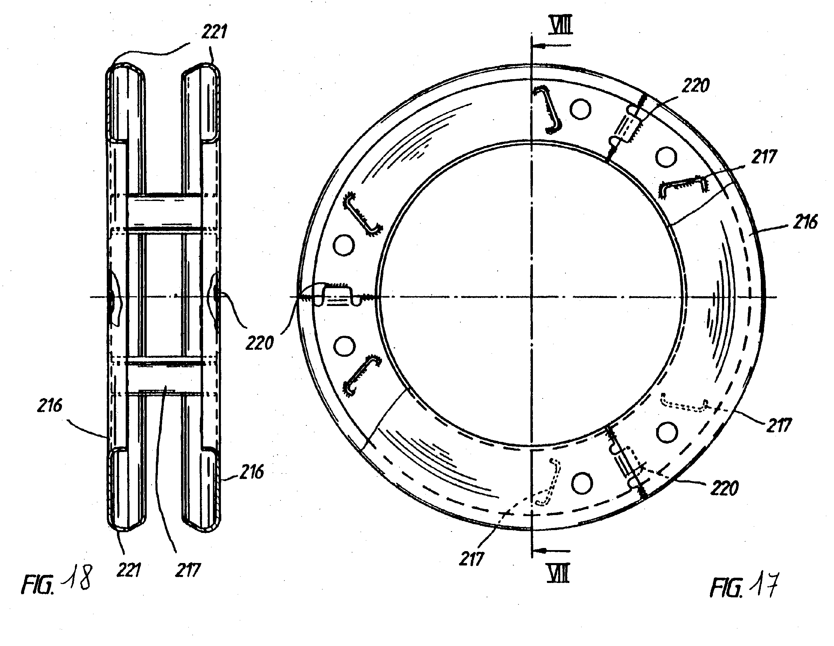

Fig. 17 die innerhalb der Gummireifen angeordneten Abstützringe in der Seitenansicht und

Fig. 18 die Abstützringe in der Ansicht VII - VII.

Die Bodenwalze 1 weist ein als zentrales Tragrohr 2 ausgebildetes Traggerüst auf, welches drehbar in dem Tragrahmen 3 gelagert ist. Dieser Tragrahmen 3 weist die Anschlußelemente 4 und 5 zum Ankuppeln an eine Bodenbearbeitungsmaschine auf. Das Anschlußelement 4 befindet sich an einem aus einem Rohr hergestellten Bügel 6, der an der Vorderseite der Bodenwalze 1 angeordnet ist. Die Anschlußelemente 5 befinden sich an dem sich über die gesamte Breite der Bodenwalze erstreckenden Rohr 7, daß auf der in Fahrtrichtung gesehen hinteren Seite der Bodenwalze 1 an Teilen des Tragrahmens 3 angeschweißt ist. Die Anschlußelemente 5 werden von jeweils zwei auf dem Rohr 7 angeschweißten Platten 8 begrenzt. Auf dem zentralen Tragrohr 2 sind über die gesamte Arbeitsbreite der Bodenwalze 1 die Gummireifen 9 derart angeordnet, daß sie einen gewissen Abstand zueinander aufweisen. Die Gummireifen 9 sind jeweils auf den Felgen 10 angeordnet. Diese Felgen 10 sind über dreieckförmig angeordneten Streben 11 mit zentralen Tragrohr 2 verbunden. Die auf dem zentralen Tragrohr 2 angeordneten Gummireifen 9 können beim Abrollen auf dem Boden 12 walken, so daß sich die Gummireifen 9 selbst reinigen.

Dieser Schaumstoff 13 weist eine progressive Federkennlinie auf. Der Gummireifen 9 ist derart ausgeschäumt, daß der Außenbereich 15 im Bereich der Lauffläche 16 des Gummireifens 9 relativ weich und der innere Bereich 17 fest ist. Die unterschiedliche Festigkeit des Schaumstoffes 13 wird durch unterschiedlich große Lufteinschlüsse 14 erreicht. Der feste Schaumstoff 13 des inneren Bereiches 17 sorgt dafür, daß der Wulst 18 des Reifens 9 immer gegen das Felgenhorn 19 der Felge 10 gedrückt wird. Der feste Schaumstoff 13 im inneren Bereich 17 sorgt also für eine sichere Befestigung des Gummireifens 9 auf der Felge 10, so daß der Gummireifen 9 nicht von der Felge 10 abspringen kann. Die im Außenbereich 15 der Lauffläche 16 des Gummireifens 9 angeordnete weiche Schaumstoffmasse 20 wirkt der Verformung des Reifens 9 in seiner Aufstandsfläche 21 auf den Boden 12 entgegen. Hierdurch wird dem Außenbereich 15 der Lauffläche 16 eine für die optimale Walzwirkung benötigte Starrheit verliehen, die es dem Gummireifen 9 beim Abrollen auf dem Boden 12 aber immer noch erlaubt zu walken, so daß einerseite eine vorzügliche Krümelung und Andrückwirkung bei der Saatbettbereitung erreicht wird und andererseits gleichzeitig ein vorzüglicher Selbstreinigungseffekt der Reifen 9 gewährleistet ist.

Die Fig. 2 zeigt einen weiteren Gummireifen 9, wobei innerhalb dieses Gummireifens 9 ein fester umlaufender Ring 22 angeordnet ist, der einen etwas kleineren Außendurchmesser d als der innere Außendurchmesser D des Gummireifens 9 aufweist. Dieser Ring 22 weist eine dem Gummireifen 9 annähernd entsprechende Kontur auf. Der Gummireifen 9 ist über Befestigungs- und Klemmelemente 23 mit der Felge 10 verbunden. Hierbei drücken die Befestigungs- und Klemmelemente 23 den Wulst 18 des Reifens 9 gegen das Felgenhorn 19 der Felge 10, so daß ein Abspringen der Reifen 9 von der Felge 10 nicht möglich ist. Während des Abrollens der Gummireifen 9 auf dem Boden 12 begrenzt der umlaufende Ring 22 das Verformen der Gummireifen 9. Der Außendurchmesser d des umlaufenden Ringes 22 stellt somit den wirksamen Walzendurchmesser der einzelnen Gummireifen 9 dar.

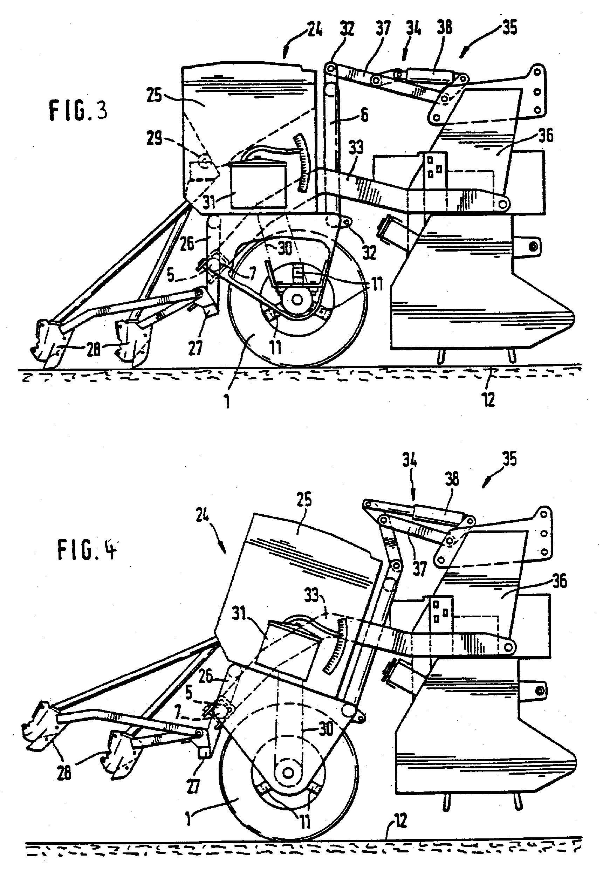

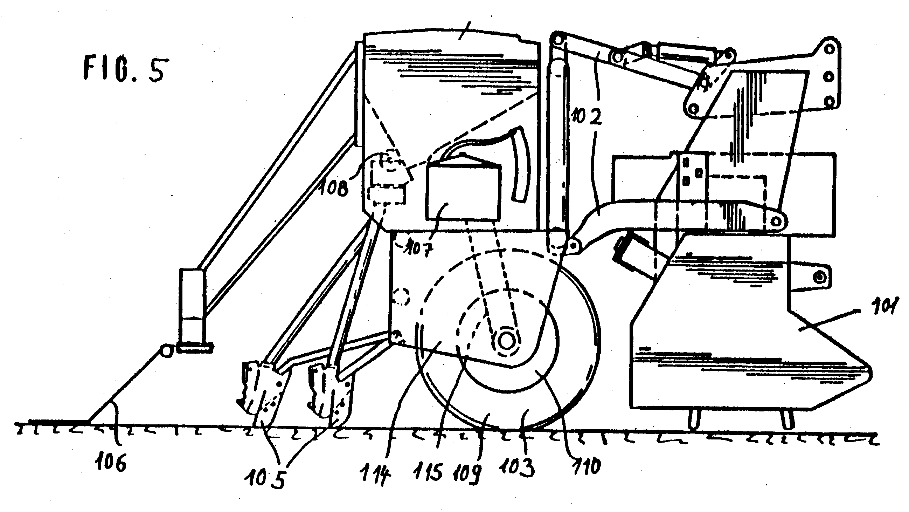

Die Fig. 3 und 4 zeigen die Bodenwalze 1, die als Laufwerk für die Sämaschine 24 ausgebildet ist. Der Vorratsbehälter 25 der Sämaschine 24 ist im wesentlichen dicht oberhalb der Bodenwalze 1 angeordnet. Dicht hinter der Bodenwalze 1 ist über die Tragarme 26 die Scharhalteschiene 27 befestigt, an der in zwei hintereinander liegenden Querreihen die Säschare 28 angelenkt sind, die das von den Dosierelementen 29 der Sämaschine 24 dosierte Saatgut in den Boden 12 ablegen. Die Dosierelemente 29 der Sämaschine 24 werden über den Kettentrieb 30 über das stufenlos einstellbare Regelgetriebe 31 von der Bodenwalze 1 angetrieben. Mit Hilfe der an den Bügel 6 angeordneten Dreipunktkupplungselemente 32 läßt sich die auf der Bodenwalze 1 angeordnete Sämaschine 24 mit dem Dreipunktkraftheber eines die Bodenwalze 1 samt Sämaschine 24 tragenden Schleppers anbringen.

Die auf einer Bodenwalze 1 aufgesattelte Sämaschine 24 läßt sich aber auch in Kombination mit einem Bodenbearbeitungsgerät verwenden. Die in die Sämaschine 24 integrierte Bodenwalze 1 läßt sich über die Tragarme 33 und die Kupplungsvorrichtung 34 mit dem Bodenbearbeitungsgerät verbinden. Durch das hintereinander Anordnen von Bodenbearbeitungsgerät und Sämaschine 24 entsteht die Bestellkombination 35.

Die Bestellkombination 35 weist beispielsweise ein als Kreiselgrubber 36 ausgebildetes Bodenbearbeitungsgerät auf, das über die Tragarme 33 und der als hydraulische Schwenkvorrichtung 37 mit dem Hydraulikzylinder 38 ausgebildeten Kupplungseinrichtung 34 mit der Sämaschine 24 verbunden ist. Die Tragarme 33 werden an den Anschlußelementen 5, die auf dem Rohr 7 hinter der Bodenwalze 1 angeordnet sind, befestigt. Die Sämaschine 24 ist um dieses Rohr 7 mit Hilfe der hydraulischen Schwenkeinrichtung 37 schwenkbar, so daß die Säschare 28 durch Verschwenken der Sämaschine 24 gemäß Fig. 5 in eine Position verschwenkbar sind, in der sie einen großen Abstand zur Bodenoberfläche 12 aufweisen.

Die Bodenwalze 1 läßt sich auch als reine Nachlaufwalze hinter einem Bodenbearbeitungsgerät einsetzen, wobei sie ebenfalls über die Tragarme 33 in einfacher Weise mit dem Bodenbearbeitungsgerät verbindbar ist.

Die Erfindung beschränkt sich nicht nur auf die angeführten Ausführungsbeispiele, sondern berücksichtigt alle zum Verfestigen eines Bodens oder einer Bodenoberfläche geeigneten Walzen bzw. Walzkörper, die in den Schutzbereich der Patentansprüche fallen.

Die Fig. 5 zeigt eine landwirtschaftliche Gerätekombination, die aus der schleppergetriebenen Bodenbearbeitungsmaschine 101 und der hinter der Bodenbearbeitungsmaschine 101 über das Dreipunktgestänge 102 angeordneten Bodenwalze 103 mit der aufgesattelten Drillmaschine 104 besteht. Die Bodenwalze 103 ist somit als Nachlaufwalze hinter der Bodenbearbeitungsmaschine 101 und gleichzeitig als Fahrwerk für die Drillmaschine 104 ausgebildet. Die Drillmaschine 104 weist die Säschare 105 und den Saatstriegel 106 auf. Von der Bodenwalze 103 aus werden über den regelbaren Antrieb 107 die Dosierorgane 108 der Drillmaschine angetrieben.

Die Bodenwalze 103 besteht aus den nebeneinander angeordneten Gummireifen 109, die auf dem drehbar gelagerten Traggerüst 110 angeordnet sind. Das Traggerüst 110 ist als Tragrohr ausgebildet, welches über die Lager 111 und die Lagerzapfen 112 an den seitlichen Tragarmen 113 und 114 dreh- bar angeordnet ist, wobei der Tragarm 114 als Lagergehäuse für den Antrieb 115 des Regelgetriebes 107 ausgebildet ist.

Auf dem durchgehenden Tragrohr 110 sind die Gummireifen 109 nebeneinander angeordnet. Das Tragrohr 110 weist einen Außendurchmesser A auf, der in etwa dem Innendurchmesser B der Gummireifen 109 entspricht. Somit sind also die Gummireifen 109 sehr einfach auf dem Tragrohr 110 von der einen Seite her aufzuschieben. An der rechten Seite des Tragrohres 110 ist der Stirnring 115 mittels der als Spannvorrichtung ausgebildeten Schrauben 116 anzuordnen. Auf der anderen Seite des Tragrohres 110 ist die Stirnwand 117 an der Stirnfläche des Tragrohres 110 angeschweißt.

Der Außendurchmesser der Stirnwand 117 is größer als die Außendurchmesser A des Tragrohres, so daß die überstehende Ring 118 als Anlagefläche für den Wulst 119 dient. Ebenfalls weist der Stirnring 115 einen größeren Außendurchmesser als das Tragrohr 110 auf, damit auch der überstehende Ring 120 des Stirnringes 117 als Anlagefläche für den Wust 119 des Gummireifens 109 dient.

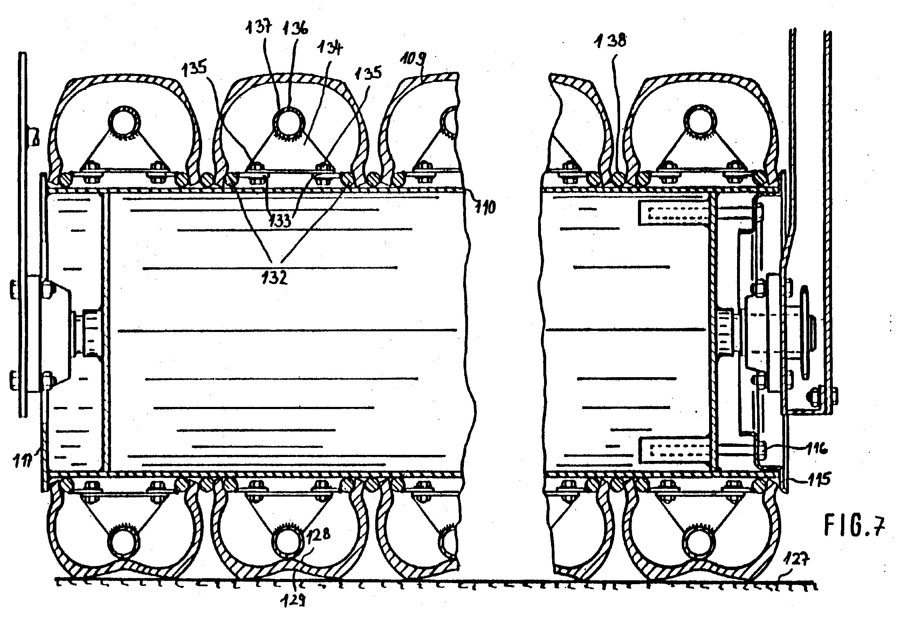

In dem Innern der Gummireifen 109 sind die Abstandsringe 121 angeordnet. Die Abstandsringe 121 weisen einen Innendurchmesser auf, der zumindest etwa dem Innendurchmesser der Gummireifen 109 sowie dem Außendurchmesser A des Tragrohres 110 entspricht. Die Abstandsringe 121 bestehen aus zwei kreisförmig gebogenen Rundstäben, die über mindestens drei Stege 122 in einem Abstand zueinander miteinander verbunden sind. An den Stegen der Abstandsringe 121 sind über die Stege 123 jeweils die Abstützringe 124 mit den Schrauben 125 befestigt. Die Abstützringe sind aus drei Teilen zusammengesetzt. Zwischen der Außenfläche des Abstützringes 124 und der Innenfläche der Lauffläche des Gummireifens 109 ist ein Abstand C vorhanden, der etwa 3/10 der Höhe H der Gummireifenseitenwand 126 entspricht. Hierdurch ist es möglich, daß der Gummireifen 109 beim Abrollen auf der Bodenoberfläche 127 wie in Fig. 7 dargestellt, sich zusammendrücken bzw. walken kann, wobei die Innenflächen 128 der Laufflächen 129 des Gummireifens 9 sich auf den Abstützring 124 abstützen kann, damit der Gummireifen 109 beim Abrollen auf der Bodenoberfläche 127 nicht ganz zusammengedrückt wird und noch eine ausreichende Rückverfestigung des Bodens erreicht wird. Zwischen den einzelnen Gummireifen 109 ist jeweils der umlaufende Ring 130, der gemäß Fig. 7 aus zwei Rundstäben, die über die Stege 131 miteinander verbunden sind besteht, angeordnet. Durch die entsprechenden Breiten der Abstandringe 121 sowie der Abstandringe 130 werden die Reifen über die als Spannvorrichtung ausgebildeten Schrauben 116 und den Stirnrädern 115 sowie der Stirnwand 117 auf dem Tragrohr in seitlicher Richtung festgeklemmt.

Es sei noch darauf hingewiesen, daß die Abstützringe 124 aus den kreisförmig gebogenen Segmentstücken bestehen und daß an diesen Segmentstücken die nach innen weisenden Stege 123 angeordnet sind, so daß die Abstützringe 124 sich über die Abstandsringe 121 auf dem Tragrohr 110 abstützen können.

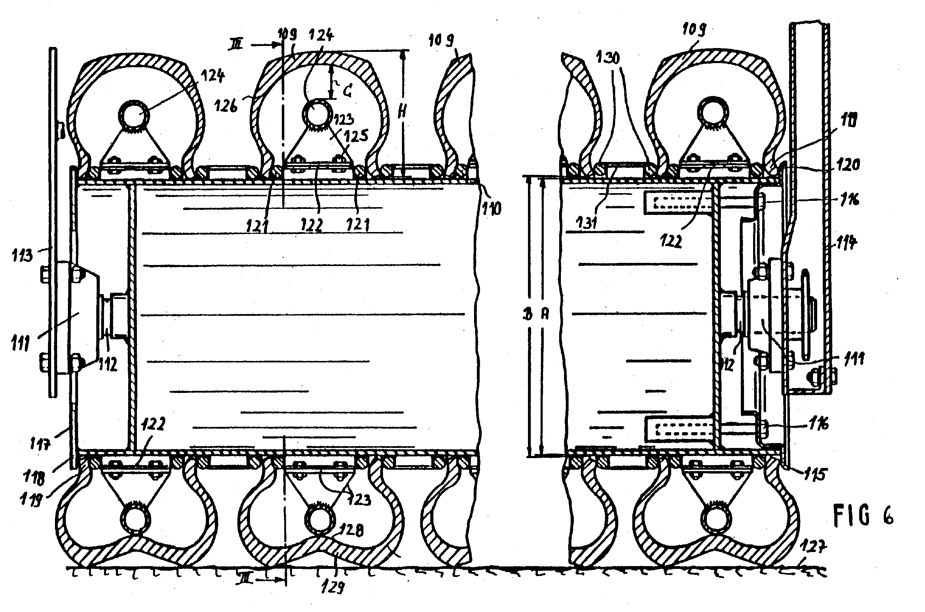

Die Bodenwalze gemäß Fig. 7 unterscheidet sich von der Bodenwalze gemäß Fig. 6 nur dadurch, daß innerhalb der Gummireifen 109 die Abstandsringe 132 angeordnet sind, die eine größere Breite als die Abstandsringe 121 gemäß Fig. 7 aufweisen. Des weiteren sind die Stege 133, die die Abstandsringe 132 miteinander verbinden, geteilt ausgebildet. Die Stege 133 werden durch den Steg 134 über die Schrauben 135 miteinander verbunden. An dem Steg 134 sind die Segmentstücke 136 der Abstützringe 137 angeordnet Des weiteren ist zwischen den jeweils nebeneinander angeordneten Gummireifen 109 der einen kreisfömigen Querschnitt aufweisende Abstandsring 138 angeordnet, der gleichzeitig eine dichtende Funktion hat und somit verhindert, daß Erde von außen in das Innere der Gummireifen 109 eindringen kann. Die Gummireifen 109 werden also auf dem Tragrohr 110 festgeklemmt.

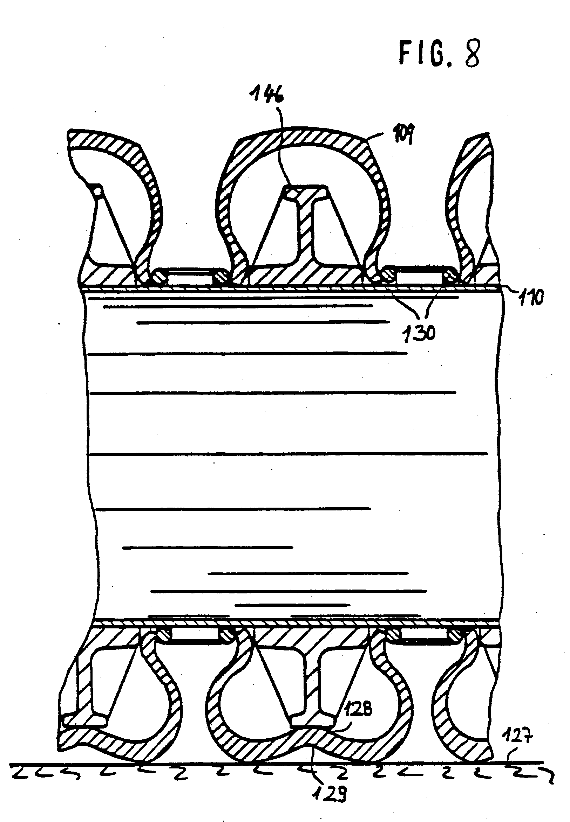

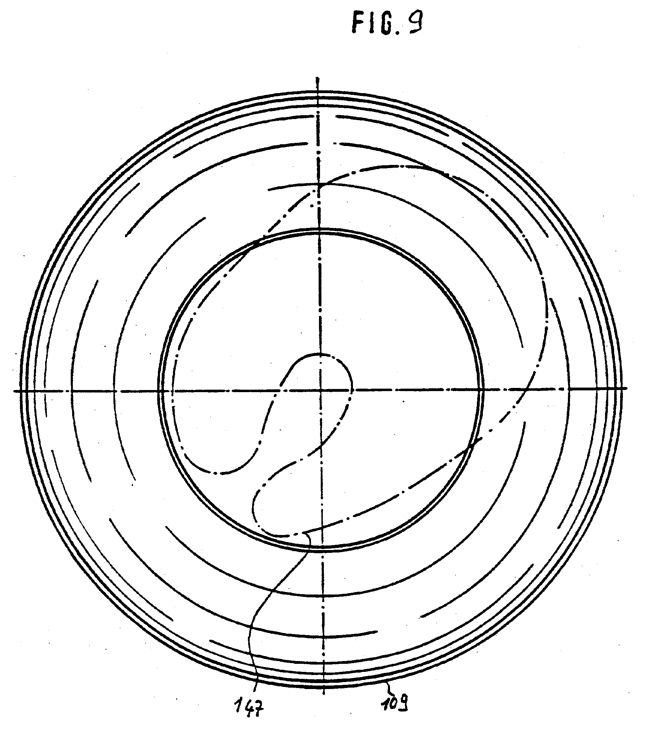

Bei der Bodenwalze gemäß Fig. 8 sind auf dem durchgehenden Tragrohr 110 die Gummireifen 109 nebeneinander angeordnet. Zwischen den nebeneinander angeordneten Gummireifen 109 sind die Abstandsringe 130 auf dem Tragrohr 110 angeordnet. In dem Innenraum der Gummireifen 109 ist jeweils der Abstützring 146, der einen doppelt T-förmigen Querschnitt aufweist, angeordnet. Diese Abstützringe 146 weisen einen Innendurchmesser auf, der in etwa dem Außendurchmesser des Tragrohres 110 sowie dem Innendurchmesser der Gummireifen 109 entspricht. Der Abstützring 146 besteht aus einem bei einer Temperatur über 70° verformbaren Thermoplastmaterial, welches bei normaler Betriebstemperatur ausreichend steif ist. Auf dem Abstützring 146 kann sich die Innenfläche 128 der Lauffläche 129 des Gummireifens 109 beim Abrollen auf der Bodenoberfläche 127 abstützen und noch ausreichend beim Abrollen auf der Bodenoberfläche 127 walken, so daß ein Selbstreinigungseffekt der Gummireifen 109 eintritt. Zur Montage bzw. zum Hineinbringen des Abstützringes 146 in den Innenraum des Gummireifens 109, wird der Abstützring 146 auf eine Temperatur von über 70° erwärmt, so daß er sich entsprechend der Fig. 9 wobei in der Fig. 9 nur die Außenkontur 147 des Abstützringes eingezeichnet ist, verformen läßt, so daß sich der Abstützring 146 leicht in den Innenraum des Gummireifens 109 schieben läßt. Nachdem Hineinbringen des Abstützringes 146 in den Innenraum des Gummireifens 109 wird der Abstützring 146 in seine normale Form gebracht, so daß er nach dem Abkühlen die gewünschte kreisförmige Form aufweist. Nach dem Abkühlen ist der Abstützring 146 ausreichend steif, so daß er die durch das Abrollen des Gummireifens 109 auf der Bodenoberfläche 127 auf ihn einwirkenden Kräfte übernehmen kann und so seine Abstützfunktion ausüben kann.

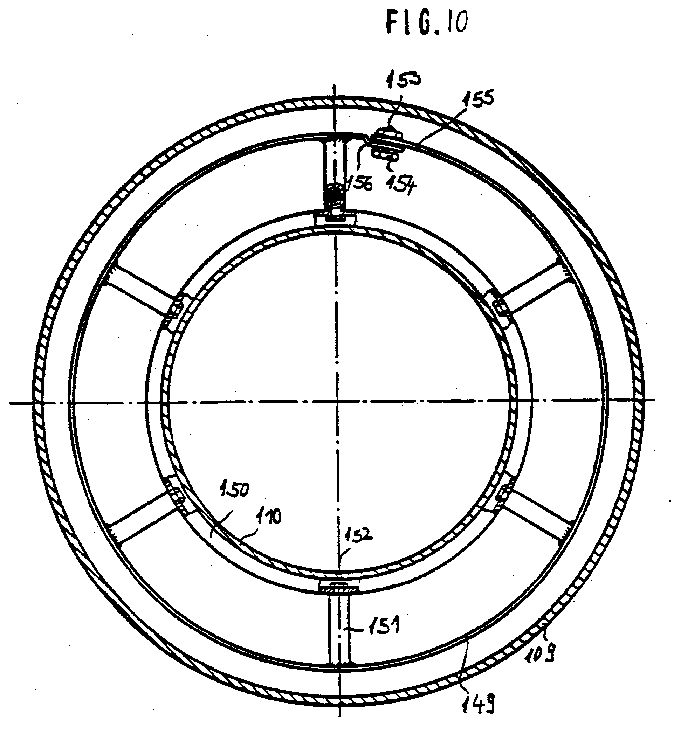

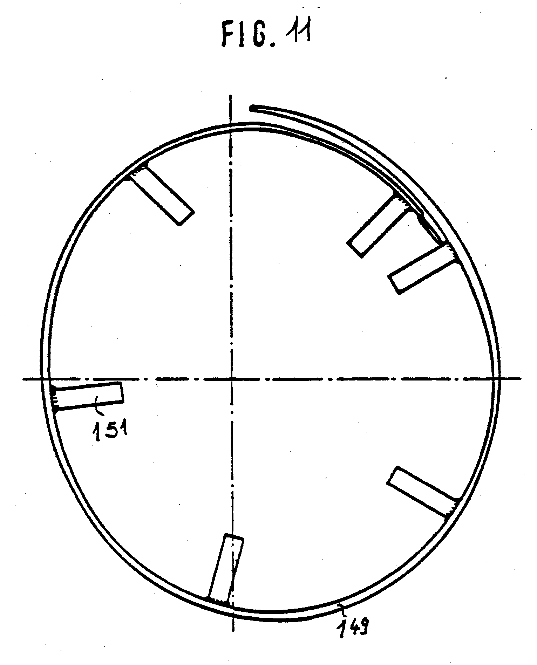

Die Bodenwalze gemäß Fig. 10 weist die Gummireifen 109 auf die auf dem Tragrohr 110 angeordnet sind. Innerhalb der Gummireifen 109 ist jeweils der Abstützring 148 angeordnet Der Abstützring 148 besteht aus dem Außenring 149 und dem Innenring 150. An dem Außenring 149 sind die Stege 151 angeordnet. Die Stege 151 können entweder Rohrhülsen sein oder andere Hülsen, die an dem Außenring angeschweißt sind. An den Stegen 151 wird der Innenring 150 angeordnet. Hierzu weist der Innenring 150 im Bereich der Stege 151 Bohrungen auf, so daß der Innenring über die Schrauben 152 mit den Stegen 151 bzw. dem Außenring 149 zu verschrauben ist. Des weiteren ist der Außenring an der Stelle 153 geteilt und über das als Schraube 154 ausgebildete Verbindungselement zu verbinden. Der Innenring weist einen Innendurchmesser auf, der etwa dem Außendurchmesser des Tragrohres 110 entspricht. Die Montage bzw. das Anordnen des Abstützringes 148 innerhalb des Reifens 109 erfolgt folgendermaßen. Zunächst wird der Außenring, da er an der Stelle 153 geteilt ist, wie in Fig. 11 dargestellt zusammengedrückt, so daß er in den Reifen eingeführt werden kann. Anschließend wird der Außenring 149 auseinandergedrückt und mittels der Schraube 152 werden die beiden Enden 155 und 156 des Außenringes durch die Schrauben 154 miteinander verbunden. D.h. also, daß sich Teile des Außenringes überlappen müssen. Anschließend wird der Innenring in den Reifen 109 eingelegt und über die Schrauben 152 wird der Innenring mit den Stegen 151 verschraubt. Anschließend wird der Reifen mit dem Abstützring auf dem Tragrohr 110 angeordnet.

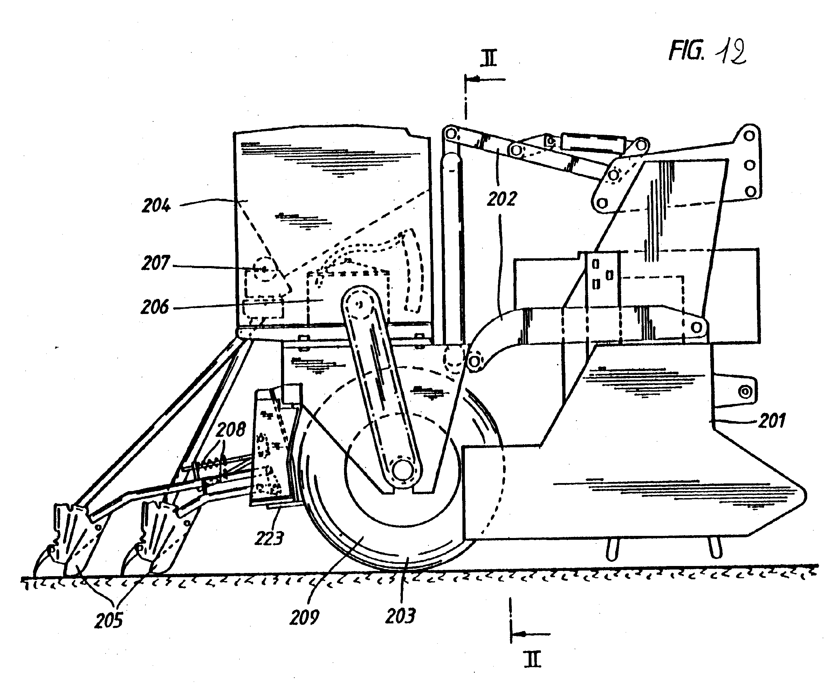

Die Fig. 12 zeigt eine landwirtschaftliche Gerätekombination, die aus der schleppergetriebenen Bodenbearbeitungsmaschine 201 und der hinter der Bodenbearbeitungsmaschine 201 über das Dreipunktgestänge 202 angeordneten Bodenwalze 203 mit der aufgesattelten Drillmaschine 204 besteht. Die Bodenwalze 203 mit somit als Nachlaufwalze hinter der Bodenbearbeitungsmaschine 201 und gleichzeitig als Fahrwerk für die Drillmaschine 204 ausgebildet. Die Drillmaschine 204 weist die Säschare 205, die in zwei hintereinanderliegenden Querreihen angeordnet sind auf. Von der Bodenwalze 203 aus werden über den regelbaren Antrieb 206 die Dosierorgane 207 der Drillmaschine 204 angetrieben. Die Säschare 205 werden durch die Schardruckfedern 208 gegen den Boden gedrückt.

Die Bodenwalze 203 besteht aus den nebeneinander angeordneten Gummireifen 209, die auf den drehbar gelagerten Traggerüst 210 angeordnet sind. Das Traggerüst 210 ist als Tragrohr ausgebildet, welches über die Lager 211 und die Lagerzapfen 212 an den seitlichen Tragarmen 213 und 214 drehbar angeordnet ist, wobei der Tragarm 214 als Lagergehäuse für den Antrieb 215 des Regelgetriebes 206 ausgebildet ist.

Auf dem durchgehenden Tragrohr 210 sind die Gummireifen 209 nebeneinander angeordnet. Das Tragrohr 210 weist einen Außendurchmesser auf, der in etwa dem Innendurchmesser der Gummireifen 209 entspricht. Somit sind also die Gummireifen 209 sehr einfach auf dem Tragrohr 210 von der einen Seite her aufzuschieben. An der einen Seite des Tragrohres 210 ist ein Stirnring mittels einer als Spannvorrichtung ausgebildeten Schraube anzuordnen. Auf der anderen Seite des Tragrohres 210 ist eine Stirnwand an der Stirnfläche des Tragrohres angeschweißt. Der Außendurchmesser der Stirnwände ist größer als der Außendurchmesser des Tragrohres 210, so daß der überstehende Ring der Stirnwand als Anlagefläche für den Wulst der Reifen dient.

In dem Innern der Gummireifen 209 sind die beiden Abstützringe 216 in einem Abstand zueinander angeordnet. Die Abstützringe 216 weisen einen Außendurchmesser auf, der kleiner ist als der Innendurchmesser der Lauffläche der Gummireifen 209. Die beiden Abstützringe 216 sind durch drei Abstandshalter 217 miteinander verbunden und auf Abstand zueinander angeordnet. In jedem Gummireifen 209 sind zwei über die Abstandshalter 217 miteinander verbundene Abstützringe 216 angeordnet. Die Abstützringe 16 sind in einem Abstand zueinander angeordnet, so daß zwischen den Abstützringen 216 in deren radialen Außenbereich sich der freie umlaufende Freiraum 218 befindet. Die Abstützringe sind dicht neben der Innerwand 219 des Reifens 209 angeordnet. Die Abstützringe 216 bestehen aus den drei zusammengesetzten Teilen, die an den Stellen 220 nach der Montage innerhalb des Reifens miteinander verschweißt werden. Die Abstützringe 216 weisen auf ihrer Außenseite 221 eine abgerundete Abstützfläche auf. Die Abstützringe 216 bestehen aus geformten Blechteilen.

Der Abstand A zwischen den beiden innerhalb des Gummireifens 209 angeordneten Abstützringen 216 ist derart groß, daß die mittlere Lauffläche 222 des Reifens 209 in den Freiraum 218 zwischen diesen beiden Abstützringen 216 sich nach innen zumindest etwas hineindrücken kann.

Hinter der Bodenwalze 203 sind die Säschare 205 derart angeordnet, daß jeweils ein Säschar 205 in Verlängerung, entgegen der Fahrtrichtung gesehen, eines Abstützringes 216, der im Inneren der Gummireifen 209 angeordnet ist, sich befindet. Des weiteren sind an dem Rahmen der Sämaschine 204 die Räumzinken 223 angeordnet, die jeweils in dem Zwischenraum 224 zwischen zwei einander benachbarten Gummireifen 209 ragen. Diese Räumzinken 223 sind etwa waagerecht angeordnet und befinden sich in einem Abstand zu den Zwischenstücken 225, welche sich zwischen den einander benachbarten Gummireifen 209 befinden. Durch die Zwischenstücke 225 und durch die durch die Abstandshalter 217 auf Abstand gehaltenen Abstützringe 216 wird sichergestellt, daß die Gummireifen 209 in einem ganz bestimmten und fixierten Abstand zueinander auf dem Tragrohr 210 angeordnet sind. Dadurch, daß durch die beiden äußeren Stirnwände 226 und 227 die Gummireifen gegeneinander gedrückt werden, wird sichergestellt, daß kein Erdreich in das Innere der Gummireifen 209 eindringen kann, da der Innenraum der Gummireifen durch das Gegeneinanderpressen der Gummireifen gegen die Zwischenstücke 225, die als Ringe ausgebildet sind, abgedichtet wird.

Die Zwischenringe 225 weisen einen derartigen Durchmesser und eine derartige Größe auf, daß sie in den Wulsteinschnitt 228 der Gummireifen 209 einfassen und so eine sichere Befestigung und ein sicheres Festklemmen der Gummireifen 209 auf dem Tragrohr 210 in jedem Falle, selbst bei Kurvenfahrten, gewährleisten. Damit das Festklemmen der Gummireifen durch die Zwischenringe 225 und durch die Abstützringe 216 noch besser gewährleistet werden kann, ist der sich gegenüber dem Außenwulst 229 auf der Innenseite befindende Innenwulst mit geeigneten Mitteln herausgeschnitten, so daß sich auf der Innenseite des Reifens 209 gegenüber dem Außenwulst 229 eine ebene Fläche ergibt. Hierdurch wird ein sicheres Festklemmen der Gummireifen 209, welche herkömmliche und gebrauchte PKW-Reifen in bevorzugter Weise sind, erreicht.

Die Funktion der Bodenwalze 203 mit den in einem Abstand zueinander angeordneten Abstützringen 216 im Inneren des Gummireifens 209 ist folgende:

Durch die vorlaufende Bodenbearbeitungsmaschine 201 wird der Boden aufgelockert und gekrümelt. Die nachfolgende Bodenwalze 203 verdichtet den Boden in streifenförmig unterschiedlich starker Weise. Im Bereich der Abstandsringe 216 ergeben die sich mit enger Schraffur gekennzeichneten stark verfestigten Verfestigungsbereiche 230. In diesen Streifen 230 wird der Boden derart stark verdichtet, daß die durch die mit Kreise angedeuteten Säschare 205 abgelegten Samenkörner optimale Keim- und Wachstumsbedingungen bereits in den ersten Wochen vor dem vollkommenen Absetzen des Bodens aufgrund des natürlichen Absetzvorganges vorfinden. In dem Bereich 231 zwischen den stark verfestigten Bereichen 230 in dem Bereich zwischen den beiden Abstützringen 216 innerhalb eines Gummireifens, wird ein etwas weniger stark verfestigter Bodenstreifen 231 erzeugt. In dem Bereich 231 drückt die Lauffläche des Gummireifens 209 sich in den Zwischenraum 218 zwischen den Abstützringen 216 nach innen. Nach dem Abrollen der Lauffläche des Gummireifens 209 auf dem Boden wird dieser mittlere, sich beim Abrollen auf der Bodenoberfläche in den Zwischenraum 218 zwischen den Abstützringen 216 hineindrückende Bereich aufgrund der Elastizität des Gummireifens wieder nach außen drücken. Diese Bewegung der Lauffläche des Gummireifens wird als Walken bezeichnet. Durch dieses derartig starke walken der Lauffläche des Gummireifens 209 ergibt sich in vorteilhafter Weise eine Selbstreinigung der Lauffläche des Gummireifens 209. Der nicht so stark verfestigte Bodenstreifen 231 setzt sich aufgrund des natürlichen Absetzvorganges des aufgelockerten Bodens in wenigen Wochen weiter; so daß in wenigen Wochen, wenn die Wurzeln der in den stark verfestigten Bodenbereichen 230 abgelegten Samenkörner in den Bereich 231 hineinwachsen, auch diese Wurzeln einen optimal verfestigten Boden in diesem Bereich 231 vor. Zwischen den einander benachbarten Reifen 209 entsteht jeweils der nur leicht verfestigte Bodenstreifen 232. Einige Wochen, nachdem die Streifen 231 ihren optimalen Verfestigungsgrad aufgrund des natürlichen Absetzvorganges erreicht haben, erreichen auch die nur leicht oder gar nicht verfestigten Bodenstreifen 232 den optimal verfestigten Verfestigungsgrad, so daß dann die in diesem Bereich hineinwachsenden Wurzeln auch noch nach weiterer Zeit einen optimal verfestigten Boden vorfinden. Somit ist also durch die erfindungsgemäße Bodenwalze gewährleistet, daß über einen sehr langen Zeitraum die Wurzeln des Saatgutes bzw. das Saatgut selbst in optimal verfestigtem Boden aufwachsen kann. U.U. kann es sinnvoll sein, die Säschare 205 nicht genau in der Mitte der stark verfestigten Bodenstreifen 230, sondern etwas seitlich versetzt und zwar in Richtung der weniger stark verfestigten Bodenstreifen 231 anzuordnen.

**Patentansprüche**

1. Bodenwalze, als Nachlaufwalze hinter einer Bodenbearbeitungsmaschine und/oder Fahrwerk einer Drillmaschine, mit nebeneinander auf einem Traggerüst (10, 11, 110, 210) drehbar angeordneten drucklosen und zum Traggerüst hin offenen Gummireifen (9, 109, 209), dadurch gekennzeichnet, daß im Inneren der Gummireifen (9, 109, 209) zwischen dem Traggerüst und dem Bereich der Lauffläche (129) des Reifens ein oder mehrere als umlaufende Ringe ausgebildete Stützkörper (22, 124, 136, 146, 149, 216) zum Abstützen der

EP 0 245 648 B2

Lauffläche (129) angeordnet sind und daß die Gummireifen auf dem Traggerüst beabstandet zweinander angeordnet sind.

2. Bodenwalze nach Anspruch 1, dadurch gekennzeichnet, daß als Stützkörper innerhalb der Gummireifen (9) ein fester umlaufenden Ring (22) angeordnet ist, der einen etwas kleineren Außendurchmesser (d) als der innere Außendurchmesser (D) des Gummireifens (9) aufweist.

3. Bodenwalze nach Anspruch 1, dadurch gekennzeichnet, daß der Ring (22) eine dem Gummireifen (9) zumindest annährend entsprechende Kontur aufweist.

4. Bodenwalze nach einem der Ansprüche 1 bis 3 dadurch gekennzeichnet, daß die Gummireifen (9) auf Felgen (10) angeordnet sind.

5. Bodenwalze nach Anspruch 4, dadurch gekennzeichnet, daß die Gummireifen (9) mit den Felgen (10) über Befestigungs- oder Klemmelementen (23) verbunden sind.

6. Bodenwalze nach Anspruch 1, dadurch gekennzeichnet, daß die Gummireifen (109) auf einem durchgehenden Tragrohr (110) angeordnet sind, welches einen Außendurchmesser (A) aufweist, der zumindest etwa dem Innendurchmesser (B) der Gummireifen (109) entspricht, daß innerhalb der Gummireifen Abstandsringe (121, 132) angeordnet sind, deren Innendurchmesser zumindest etwa dem Innendurchmesser (B) der Gummireifen (109) entspricht, und daß innerhalb der Gummireifen (109) als Stützkörper Abstützringe angeordnet sind, deren Außendurchmesser in montierter Position kleiner als der Innendurchmesser der Lauffläche der Gummireifen (109) ist.

7. Bodenwalze nach Anspruch 6, dadurch gekennzeichnet, daß innerhalb der Gummireifen (109) aus zumindest zwei vorzugsweise drei Teilen zusammengesetze Abstützringe (124, 136,) angeordnet sind.

8. Bodenwalze nach einem der Ansprüche 2 bis 8, dadurch gekennzeichnet, daß zwischen der Außenfläche der Abstützringe (124, 136,) und der Innenfläche (128) der Lauffläche (129) des Gummireifens (109) ein Abstand (C) von zumindest einem Zehntel, vorzugsweise 1/6 bis 3/10 der Höhe (H) der Gummireifenseitenwand (126) vorhanden ist.

9. Bodenwalze nach einem der Ansprüche 6 bis 8, dadurch gekennzeichnet, daß zwischen den nebeneinander auf dem Tragrohr (110) angeordneten Gummireifen (109) jeweils ein umlaufenden Ring (130, 138) angeordnet ist.

10. Bodenwalze nach einem der Ansprüche 6 bis 9, dadurch gekennzeichnet, daß die aus mehreren Teilen zusammengesetzten Abstützringe (124, 136,) an den Abstandsringen (121, 132,) befestigt sind.

11. Bodenwalze nach einem der Ansprüche 7 bis 10, dadurch gekennzeichnet, daß die Teile der Abstützringe als kreisförmige Segmenstücke ausgebildet sind, an denen nach innen weisenden Stege angeordnet sind, die sich auf dem Tragrohr und/oder den Abstandsringen abstützen.

12. Bodenwalze nach einem der Ansprüche 6 bis 11, dadurch gekennzeichnet, daß an dem Tragrohr (110) zumindest an der einem Stirnseite des Tragrohres (110) eine Spannvorrichtung (116) zum Festklemmen der Gummireifen auf dem Tragrohr in seitlicher Richtung angeordnet ist.

13. Bodenwalze nach einem der Ansprüche 1 bis 12, dadurch gekennzeichnet, daß die Gummireifen (109) auf einem durchgehenden Tragrohr angeordnet sind, welches einen Außendurchmesser aufweist, der zumindest etwa dem Innendurchmesser der Gummireifen entspricht und daß innerhalb der Gummireifen (109) zumindest ein Abstützring (146) angeordnet ist, der aus einem bei einer Temperatur über zumindest 70°C verformbaren Thermoplastmaterial besteht, welches bei normaler Betriebstemperatur ausreichend steif ist.

14. Bodenwalze nach Anspruch 13, dadurch gekennzeichnet, daß der Abstützring (146) einen doppel-T-förmigen Querschnitt aufweist.

15. Bodenwalze nach einem der Ansprüche 6 bis 14, dadurch gekennzeichnet, daß der Abstützring (148) zumindest an einer Stelle geteilt ist und nach innen ragende Stege aufweist, und daß die Stege (151) mit einem inner Ring (150) verbindbar sind, der einen Innendurchmesser aufweist, der etwa dem Außendurchmesser des Tragrohres entspricht.

16. Bodenwalze nach einem der Ansprüche 1 bis 15, dadurch gekennzeichnet, daß in jedem Gummireifen (209) mindestens zwei Abstützringe (216) angeordnet sind.

17. Bodenwalze nach Anspruch 16, dadurch gekennzeichnet, daß die Abstützringe (216) in einem Abstand voneinander angeordnet sind und daß zwischen den Abstützringen (216) zumindest in deren Außenbereich ein freier umlaufender Freiraum (218) ist.

18. Bodenwalze nach Anspruch 16 und 17, dadurch gekennzeichnet, daß die Abstützringe (216) dicht neben der Innenwand (219) des jeweiligen Gummireifens (209) angeordnet sind.

19. Bodenwalze nach einem der Ansprüche 16 bis 18, dadurch gekennzeichnet, daß die Abstützringe (216) jeweils aus drei zusammengesetzten Teilen bestehen.

20. Bodenwalze nach einem der Ansprüche 16 bis 19, dadurch gekennzeichnet, daß die Abstützringe (216) auf ihrer Außenseite eine abgerundete Abstützfläche aufweisen.

21. Bodenwalze nach einem der Ansprüche 1 bis 20, dadurch gekennzeichnet, daß die Stützkörper (216)

10

aus geformten Blech oder Kunststoffteilen bestehen.

22. Bodenwalze nach einem der Ansprüche 16 bis 24, dadurch gekennzeichnet, daß der Abstand zwischen den beiden innerhalb des Gummireifens (209) angeordneten Abstützringen (216) derart groß ist, daß der Reifen in dem Freiraum (218) zwischen diesen Abstützringen (216) sich nach innen zumindest etwas hineindrücken kann.

23. Bodenwalze nach einem der Ansprüche 16 bis 22, dadurch gekennzeichnet, daß innerhalb der Gummireifen (209) jeweils mehr als zwei Abstützringe angeordnet sind, die in ihrem Außenbereich zueinander einen umlaufende Freiraum aufweisen.

24. Bodenwalze nach einem der Ansprüche 2 bis 13, wobei hinter der Bodenwalze Säschare einer Sämaschine angeord net sind, dadurch gekennzeichnet, daß jeweils ein Säschar (205) in Verlängerung eines im inneren der Gummireifen (209) angeordneten Abstützringes (216) angeordnet ist.

25. Bodenwalze nach einem der Ansprüche 1 bis 24, dadurch gekennzeichnet, daß an dem Rahmen der Bodenwalze (203) oder an dem Rahmen der nachgeordneten Sämaschine Räumzinken (223) angeordnet sind, die jeweils in dem Zwischenraum (224) zwischen einander benachbarten Gummireifen (209) ragen.

26. Bodenwalze nach Anspruch 25, dadurch gekennzeichnet, daß die Räumzinken (223) etwa waagerecht angeordnet sind und sich in einem Abstand zu den Zwischenstücken (225) zwischen den Gummireifen befinden.

## Claims

1. Ground roller, utilised as a follower roller behind a ground cultivating machine and/or chassis of a seed drill, including pressureless rubber tyres (9, 109, 209), which are rotatably disposed adjacent one another on a supporting frame (10, 11, 110, 210) and are open towards the supporting frame, characterised in that one or more supporting bodies (22, 124, 136, 146, 149, 216), which are in the form of circumferential rings, are disposed in the interior of the rubber tyres (9, 109, 209) between the supporting frame and the region of the tread surface (129) of the tyre in order to support the tread surface (129), and in that the rubber tyres are disposed on the supporting frame with spacings therebetween.

2. Ground roller according to claim 1, characterised in that a hard, circumferential ring (22) is disposed as a supporting body internally of the rubber tyres (9) and has a slightly smaller external diameter (d) than the inner external diameter (D) of the rubber tyre (9).

3. Ground roller according to claim 1, characterised in that the ring (22) has a configuration which corresponds, at least approximately, to the rubber tyre (9).

4. Ground roller according to one of claims 1 to 3, characterised in that the rubber tyres (9) are disposed on rims (10).

5. Ground roller according to claim 4, characterised in that the rubber tyres (9) are connected to the rims (10) by securing or clamping means (23).

6. Ground roller according to claim 1, characterised in that the rubber tyres (109) are disposed on a continuous tubular supporting member (110), which has an external diameter (A) corresponding, at least approximately, to the internal diameter (B) of the rubber tyres (109), in that spacer rings (121, 132) are disposed internally of the rubber tyres, the internal diameter of which rings corresponds, at least approximately, to the internal diameter (B) of the rubber tyres (109), and in that supporting rings are disposed internally of the rubber tyres (109) as supporting bodies, the external diameter of said rings being smaller in the assembled position than the internal diameter of the tread surface of the rubber tyres (109).

7. Ground roller according to claim 6, characterised in that supporting rings (124, 136), comprising at least two, preferably three component parts, are disposed internally of the rubber tyres (109).

8. Ground roller according to one of claims 2 to 7, characterised in that there is a spacing (C) of at least one-tenth, preferably one-sixth to three-tenths, of the height (H) of the lateral wall (126) of the rubber tyre between the external face of the supporting rings (124, 136) and the internal face (128) of the tread surface (129) of the rubber tyre (109).

9. Ground roller according to one of claims 6 to 8, characterised in that a circumferential ring (130, 138) is disposed between each of the rubber tyres (109) which are disposed adjacent one another on the tubular supporting member (110).

10. Ground roller according to one of claims 6 to 9, characterised in that the supporting rings (124, 136), comprising a plurality of component parts, are secured to the spacer rings (121, 132).

11. Ground roller according to one of claims 7 to 10, characterised in that the component parts of the supporting rings are formed as circular segmental pieces on which inwardly pointing ribs are disposed, which are supported on the tubular supporting member and/or the spacer rings.

12. Ground roller according to one of claims 6 to 11, characterised in that a clamping device (116) is disposed on the tubular supporting member (110), at least on one end face of the tubular supporting member (110), for securedly clamping the rubber tyres on the tubular supporting member in the lateral direction.

13. Ground roller according to one of claims 1 to 12, characterised in that the rubber tyres (109) are disposed on a continuous tubular supporting member, which has an external diameter corresponding, at least approximately, to the internal diameter of the rubber tyres (109), and in that at least one supporting ring (146) is disposed internally of the rubber tyres (109) and is formed from a thermoplastic material which is deformable at a temperature above at least 70°C and is sufficiently rigid at normal operational temperature.

14. Ground roller according to claim 13, characterised in that the supporting ring (146) has a double T-shaped cross-section.

15. Ground roller according to one of claims 6 to 14, characterised in that the supporting ring (146) is divided at one location at least and has inwardly producting ribs, and in that the ribs (151) are connectable to an inner ring (150) which has an internal diameter corresponding approximately to the external diameter of the tubular supporting member.

16. Ground roller according to one of claims 1 to 15, characterized in that at least two supporting rings (216) are disposed in each rubber tyre (209).

17. Ground roller according to claim 16, characterized in that the supporting rings (216) are spaced from one another, and in that there is a free, circumferential space (218) between the supporting rings (216), at least in their external region.

18. Ground roller according to claims 16 and 17, characterised in that the supporting rings (216) are disposed close to the internal wall (219) of the respective rubber tyre (209).

19. Ground roller according to one of claims 16 to 18, characterised in that the supporting rings (216) each comprise three component parts.

20. Ground roller according to one of claims 16 to 19, characterised in that the supporting rings (216) have a rounded supporting face on their outer surface.

21. Ground roller according to one of claims 1 to 20, characterised in that the supporting bodies (216) are formed from shaped sheet metal or pieces of plastics material.

22. Ground roller according to one of claims 16 to 21, characterised in that the distance between the two supporting rings (216), disposed internally of the rubber type (209), is such that the tyre can be compressed at least slightly inwardly in the space (218) between these supporting rings (216).

23. Ground roller according to one of claims 16 to 22, characterised in that more than two supporting rings are disposed internally of each rubber tyre (209), and they are spaced circumferentially from one another in respect of their external region.

24. Ground roller according to one of claims 2 to 13, wherein sowing coulters of a seed drill are disposed behind the ground roller, characterised in that a sowing coulter (205) is disposed as an extension of each supporting ring (216) disposed in the exterior of the rubber tyres (209).

25. Ground roller according to one of claims 1 to 24, characterised in that tines (223) are disposed on the frame of the ground roller (203) or on the frame of the subsequently provided seed drill, each of said tines protuding into the gap (224) between adjacent rubber tyres (209).

26. Ground roller according to claim 25, characterised in that the tines (223) are disposed substantially horizontally and are spaced from the intermediate pieces (225) between the rubber tyres.

**Revendications**

1. Rouleau de sol constituant un rouleau-suiveur, placé derrière une machine pour le travail du sol et/ou constituant le châssis de rouleau d'un semoir, rouleau comportant des pneumatiques (9, 109, 209) juxtaposés à rotation sur un châssis de support (10, 11, 110, 210), caractérisé en ce qu'à l'intérieur des pneumatiques (9, 109, 209) sans pression, ouverts vers le châssis de support, et la zone de la surface de roulement (109) des pneumatiques, on a un ou plusieurs organes d'appui (13, 22, 124, 136, 143, 146, 149, 216) en forme d'anneaux périphériques pour servir d'appui à la surface de roulement (129) et les pneumatiques sont montés écartés les uns des autres sur le châssis du support.

2. Rouleau de sol selon la revendication 1, caractérisé en ce que l'organe d'appui à l'intérieur des pneumatiques (9) est un anneau périphérique (22) rigide qui présente un diamètre extérieur (d) légèrement inférieur au diamètre intérieur (D) du pneumatique (9).

3. Rouleau de sol selon la revendication 1, caractérisé en ce que l'anneau (22) présente un contour qui correspond au moins approximativement à celui du pneumatique (9).

4. Rouleau de sol selon l'une des revendications 1 à 3, caractérisé en ce que les pneumatiques (9) sont

EP 0 245 648 B2

montés sur des jantes (10).

5. Rouleau de sol selon la revendication 4, caractérisé en ce que les pneumatiques (9) sont reliés par leur jantes (10) à l'aide d'éléments de fixation ou de serrage (23).

6. Rouleau de sol selon la revendication 1, caractérisé en ce que les pneumatiques (109) sont montés sur un tube de support (110) traversant, ayant un diamètre extérieur (A) correspondant au moins sensiblement au diamètre intérieur (B) des pneumatiques (109), et des anneaux d'appui (121, 132) sont prévus à l'intérieur des pneumatiques (109), anneaux dont le diamètre intérieur correspond au moins sensiblement au diamètre intérieur (B) des pneumatiques (109), et en ce qu'à l'intérieur des pneumatiques (109), l'organe d'appui comporte des anneaux d'appui dont le diamètre extérieur, en position montée, est inférieur au diamètre intérieur de la surface de roulement des pneumatiques (109).

7. Rouleau de sol selon la revendication 6, caractérisé en ce que les pneumatiques (109) reçoivent à l'intérieur des anneaux d'appui (124, 136) qui se composent d'au moins deux et de préférence trois parties.

8. Rouleau de sol selon l'une des revendications 2 à 8, caractérisé en ce qu' entre la surface extérieure des anneaux d'appui (124, 136) et la surface intérieure (128) de la surface de roulement (129) du pneumatique (109), il subsiste une distance (C) d'au moins 1/10ème et de préférence de 1/6ème à 3/10ème de hauteur (H) de la paroi latérale (126) du pneumatique.

9. Rouleau de sol selon l'une des revendications 6 à 8, caractérisé en ce qu'entre les pneumatiques (109) juxtaposés sur le tube de support (110), il est chaque fois prévu un anneau périphérique (130, 138).

10. Rouleau de sol selon l'une des revendications 6 à 9, caratérisé en ce que les anneaux d'appui (124, 136) composés de plusieurs parties sont fixés aux anneaux d'écartement (121, 132).

11. Rouleau de sol selon l'une des revendications 75 à 10, caractérisé en ce que les parties des anneaux d'appui sont des segments d'arcs de cercle avec des entretoises tournées vers l'intérieur et qui s'appuient sur le tube de support et/ou les anneaux d'écartement.

12. Rouleau de sol selon l'une des revendications 9 à 11, caractérisé en ce que sur le tube de support (110), au moins sur l'une des faces frontales du tube de support (110), il est prévu un dispositif de serrage (116) pour serrer dans la direction latérale les pneumatiques sur le tube de support.

13. Rouleau de sol selon d'une des revendications 1 à 12, caractérisé en ce que les pneumatiques (109) sont montés sur un tube de support, traversant ayant un diamètre extérieur correspondant au moins sensiblement au diamètre intérieur des pneumatiques et en ce qu'à l'intérieur des pneumatiques (109), il est prévu chaque fois au moins un anneau d'appui (146) en une matière thermoplastique déformable à une température supérieure à au moins 70°C et qui, à la température normale d'utilisation, est suffisamment rigide.

14. Rouleau de sol selon la revendication 13, caractérisé en ce que l'anneau d'appui (146) a une section en double T.

15. Rouleau de sol selon l'une des revendications 6 à 14, caractérisé en ce que l'anneau d'appui (146) est coupé au moins en un endroit et comporte des entretoises tournées vers l'intérieur, les entretoises (151) pouvant être reliées par un anneau intérieur (150) ayant un diamètre intérieur correspondant sensiblement au diamètre extérieur du tube de support.

16. Rouleau de sol selon l'une des revendications 1 à 15, caractérisé en ce que dans chaque pneumatique (209), on a au moins deux anneaux d'appui (216).

17. Rouleau de sol selon la revendication 16, caractérisé en ce que les anneaux d'appui (216) sont distants les uns des autres et en ce qu'entre les anneaux d'appui (216), il subsiste dans la zone extérieure un volume libre (218) périphérique.

18. Rouleau de sol selon les revendications 16 et 17, caractérisé en ce que les anneaux d'appui (216) sont directement juxtaposés à la paroi intérieure (219) du pneumatique (209) correspondant.

19. Rouleau de sol selon l'une des revendications 16 à 18, caractérisé en ce que les anneaux d'appui (216) présentent sur leur face extérieure une surface d'appui arrondie.

20. Rouleau de sol selon l'une des revendications 16 à 19, caractérisé en ce que les organes d'appui (216) présentent sur leur face extérieure une surface d'appui arrondie.

21. Rouleau de sol selon l'une des revendications 1 à 20, caractérisé en ce que les organes d'appui (216) sont des pièces en tôles mises en forme ou des pièces en matière synthétique.

22. Rouleau de sol selon l'une des revendications 16 à 21, caractérisé en ce que la distance entre les deux anneaux d'appui (216) à l'intérieur du pneumatique (209) est suffisamment grande pour que le pneumatique puisse s'enfoncer au moins quelque peu dans le volume libre (218) restant entre les anneaux d'appui (216).

23. Rouleau de sol selon l'une des revendications 16 à 22, caractérisé en ce qu'à l'intérieur du pneumatique (209), on a placé chaque fois plus de deux anneaux d'appui dont la zone extérieure forme entre eux un volume libre périphérique.

24. Rouleau de sol selon l'une des revendications 2 à 13, avec derrière le rouleau de sol, un des socs d'un semoir, rouleau caractérisé en ce qu'il y a chaque fois un soc (205) dans le prolongement d'un anneau d'appui (216) à l'intérieur du pneumatique (209).

25. Rouleau de sol selon l'une des revendications 1 à 24, caractérisé en ce que sur le châssis du rouleau de sol (203) ou le châssis du semoir en aval, on a des dents de nettoyage (223) qui pénètrent respectivement dans l'intervalle (224) entre des pneumatiques adjacents (209).

26. Rouleau de sol selon la revendication 25, caractérisé en ce que les dents de nettoyage (223) sont sensiblement horizontales et se trouvent à une certaine distance des pièces intermédiaires (225) entre les pneumatiques.

FIG.1

EP 0 245 648 B2

FIG. 2

FIG. 2

FIG.3

FIG.4

FIG. 5

EP 0 245 648 B2

FIG 6

FIG.7

EP 0 245 648 B2

FIG. 8

FIG.9

147        109

FIG. 10

FIG. 11

151

149

FIG. 12

EP 0 245 648 B2

FIG. 13

EP 0 245 648 B2

FIG. 14

FIG. 15

FIG. 16

FIG. 17

FIG. 18